(19) **Europäisches Patentamt / European Patent Office / Office européen des brevets**

(11) **EP 1 632 668 B1**

(12) **FASCICULE DE BREVET EUROPEEN**

(45) Date de publication et mention
de la délivrance du brevet:
**24.07.2013 Bulletin 2013/30**

(51) Int Cl.:
*F02D 41/00* *(2006.01)*   *F02D 41/40* *(2006.01)*
*F02D 41/30* *(2006.01)*

(21) Numéro de dépôt: **05291784.6**

(22) Date de dépôt: **25.08.2005**

(54) **Procédé de contrôle d'un moteur à combustion interne à injection directe de carburant et moteur utilisant un tel procédé**

Vorrichtung zur Steuerung einer Brennkraftmaschine mit Direkteinspritzung und Brennkraftmaschine mit solcher Vorrichtung

System for controlling a combustion engine with direct injection and engine with such system

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.09.2004 FR 0409430**

(43) Date de publication de la demande:
**08.03.2006 Bulletin 2006/10**

(73) Titulaire: **Institut Français du Pétrole**
**92852 Rueil Malmaison Cedex (FR)**

(72) Inventeurs:
• **Castagne, Michel**
**92000 Nanterre (FR)**
• **Perrin, Hervé**
**60100 Creil (FR)**

(56) Documents cités:
**EP-A- 1 279 821    EP-A- 1 384 875**
**US-A- 5 934 249    US-A1- 2001 013 329**

**Description**

La présente invention se rapporte à un procédé de contrôle de la combustion pour un moteur à combustion interne, notamment à injection directe, et à un moteur utilisant un tel procédé.

Elle concerne notamment les moteurs de type Diesel avec recirculation de gaz brûlés et plus particulièrement les moteurs de ce type pouvant fonctionner selon deux modes de combustion. Un mode de combustion traditionnelle consistant à l'injection du carburant autour du Point Mort Haut Combustion et à la combustion par diffusion est préférentiellement utilisé aux charges élevées, tandis qu'un autre mode de combustion, dit mode homogène est utilisé aux faibles et moyennes charges.

Dans ce dernier mode de combustion, il est connu de mélanger le carburant issu d'un injecteur avec le ou les fluides gazeux admis dans la chambre de combustion de ce moteur, tel que de l'air ou un mélange d'air et de gaz d'échappement recirculés, de manière à obtenir un mélange carburé homogène avant le démarrage de la combustion.

Ceci est connu, notamment pour les moteurs Diesel, sous le vocable général de « Homogeneous Charge Compression Ignition » (en abrégé H.C.C.I) et le demandeur a développé un tel mode de combustion en utilisant un injecteur de carburant à faible angle de nappe qui permet d'éviter le mouillage des parois du cylindre par le carburant injecté. Ceci permet ainsi d'éviter non seulement une dégradation de la tenue du lubrifiant présent sur cette paroi, mais aussi une augmentation des émissions de polluants et une réduction des performances du moteur, notamment en termes de consommation en carburant. Le développement de ce mode de combustion est plus précisément décrit dans les brevets français N° 2 818 324 et 2 818 325 du demandeur couvrant un tel procédé utilisé sous la dénomination NADI™ .

De plus, à faibles et moyennes charges, ce mode de combustion homogène permet de générer de faibles températures de flamme lors de la combustion du mélange carburé dans la chambre de combustion, ce qui réduit de façon notable les émissions d'oxydes d'azote (NOx) et de particules tout en préservant le rendement du moteur.

Pour favoriser un tel mode de combustion, il est souhaitable d'introduire, en plus de l'air d'admission, de grandes quantités de gaz brûlés issus de l'échappement et d'associer cette recirculation de gaz brûlés à des stratégies d'injection de carburant spécifiques. Le moyen le plus couramment utilisé pour effectuer une telle recirculation consiste à envoyer une partie des gaz d'échappement à l'admission du moteur, via un circuit externe dit d'EGR (Exhaust Gas Recirculation),

Par contre, comme déjà mentionné, de tels moteurs sont également prévus pour fonctionner en combustion traditionnelle qui requiert quant à elle des taux de gaz brûlés plus modérés et des stratégies d'injection différentes de celles utilisées en combustion homogène.

Le problème rencontré avec ce type de moteur fonctionnant selon deux modes de combustion réside dans le fait qu'il est difficile de garantir un contrôle rapide et précis de la masse d'air et/ou de gaz brûlés admis dans le cylindre en fonction de la demande du conducteur, car la dynamique de la boucle d'air (air et/ou gaz brûlés) est relativement lente, de l'ordre de quelques secondes, notamment si on la compare à celle de la boucle carburant qui, elle, réagit de l'ordre du cycle de combustion du moteur. De ce fait, lors d'une phase de fonctionnement transitoire, les réglages d'air et/ou de gaz brûlés peuvent être inadaptés à ceux du carburant, ce qui n'est pas favorable à l'obtention d'une combustion optimale en termes d'émissions de polluants, de bruits de combustion ou de consommation de carburant (voir notamment US 2001/013329, US 5 934 249, EP 1 384 875 ou EP 1 279 821).

La présente invention se propose de remédier aux inconvénients mentionnés ci-dessus grâce à un procédé qui permet d'obtenir une combustion optimale, tout en cherchant à garantir un couple répondant à la demande du conducteur.

A cet effet, l'invention concerne un procédé de contrôle d'un moteur à combustion interne comprenant un moyen d'injection directe de carburant dans la chambre de combustion d'un cylindre, un moyen d'admission d'au moins un fluide dans ladite chambre, un moyen d'échappement de gaz brûlés et une unité de calcul et de commande recevant des informations relatives au moins à la demande de couple du conducteur et à la vitesse de rotation du moteur, caractérisé en ce qu'il consiste à :

a) déterminer le couple désiré correspondant notamment à la demande du conducteur,
b) à partir de ce couple désiré, déterminer la PMI Pression Moyenne Indiquée désirée à partir de laquelle sont établis les paramètres pour commander l'admission d'au moins un fluide dans la chambre de combustion,
c) déterminer la PMI de consigne à partir de la PMI désirée et d'au moins une grandeur liée au fluide admis dans la chambre de combustion, pour définir les paramètres d'injection de carburant dans ladite chambre de combustion.

Préférentiellement, ladite grandeur peut être liée à l'air introduit dans la chambre de combustion.

Cette grandeur peut correspondre à la masse d'air introduite dans la chambre de combustion.

Avantageusement, le procédé peut consister à évaluer ladite grandeur par des observateurs.

Ce procédé peut consister à déterminer la PMI de consigne en considérant en outre la vitesse de rotation du moteur.

De manière avantageuse, le procédé de contrôle peut consister à réaliser une correction de l'injection en comparant la grandeur liée aux gaz brûlés recirculés et/ou à la masse d'air introduit dans cette chambre de combustion et les valeurs de référence de cette grandeur établies à partir de la PMI de consigne.

Cette grandeur peut être liée aux gaz brûlés recirculés et être estimée à partir d'observateurs.

Dans le cas d'un moteur à allumage commandé, le procédé peut consister à contrôler les paramètres de l'allumage à partir de la PMI de consigne.

Ce procédé peut consister à corriger les paramètres de l'allumage en fonction de l'écart entre la grandeur liée aux gaz brûles recirculés et/ou à la masse d'air introduit dans la chambre de combustion et les valeurs de référence de cette grandeur établies à partir de la PMI de consigne.

L'invention peut également s'appliquer à un moteur à combustion interne à injection directe de carburant comprenant au moins un cylindre avec une chambre de combustion comprenant un moyen d'injection de carburant dans ladite chambre de combustion, un moyen d'admission d'au moins un fluide dans cette chambre de combustion et un moyen d'échappement de gaz brûlés, la combustion dans ladite chambre étant contrôlée par une unité de calcul et de commande, caractérisé en ce que l'unité comprend un module de commande des paramètres d'admission d'au moins un fluide dans la chambre de combustion, un module de commande des paramètres d'injection de carburant et un module d'acquisition/spécification pour les modules de commande.

L'invention peut notamment trouver son application à un moteur à combustion Diesel.

Elle peut également être appliquée à un moteur comprenant au moins un cylindre, un piston coulissant dans ce cylindre et comprenant un téton pointant vers la tête du cylindre et disposé au centre d'un bol concave, des moyens d'admission et d'échappement de gaz brûlés et au moins un injecteur pour injecter du carburant avec un angle de nappe inférieur ou égal à $2Arctg\dfrac{CD}{2F}$

où CD est le diamètre du cylindre et F la distance entre le point d'origine des jets de carburants issus de l'injecteur et la position du piston correspondant à un angle de vilebrequin de 50° par rapport au point mort haut.

Les autres caractéristiques et avantages de l'invention vont apparaître à la lecture de la description qui va suivre, donnée à titre uniquement illustratif et non limitatif, et à laquelle sont annexées :

- la figure 1 montre un moteur à combustion interne utilisant le procédé de contrôle de combustion selon l'invention et
- la figure 2 est un schéma qui illustre le circuit logique utilisé dans le procédé selon l'invention.

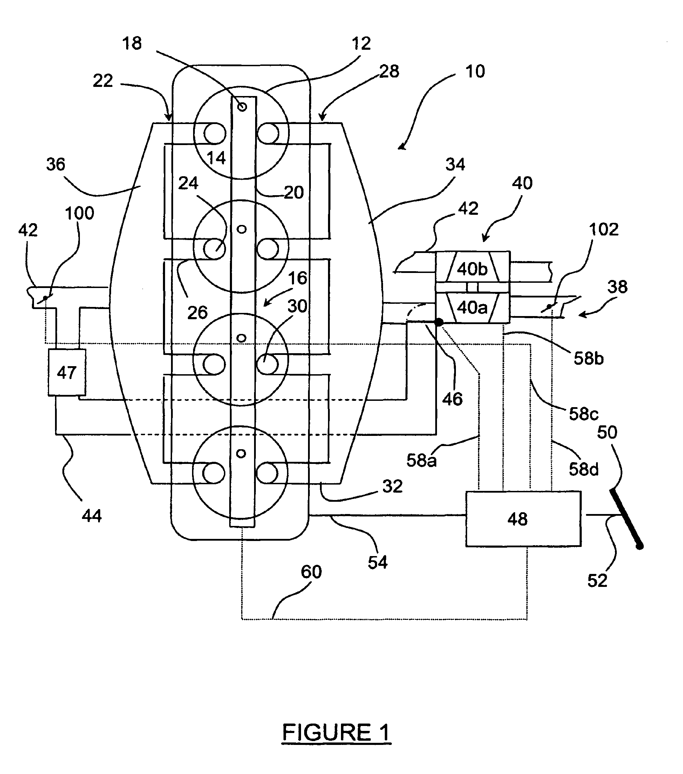

La figure 1 illustre de façon schématique, un moteur à combustion interne 10 à injection directe, de type Diesel, pouvant fonctionner selon deux modes, un mode de combustion traditionnelle, avec l'injection du carburant autour du PMH combustion et combustion par diffusion, utilisé aux charges élevées, et un mode de combustion homogène avec injecteur à faible nappe, qui est utilisé aux faibles et moyennes charges.

Ce moteur comprend au moins un cylindre 12 avec une chambre de combustion 14 à l'intérieur de laquelle se produit la combustion d'un mélange carburé. Le cylindre comprend au moins un moyen d'injection directe de carburant 16, comprenant notamment un injecteur de carburant 18 alimenté par une rampe 20 (système communément baptisé "common rail"). Ce cylindre comprend également au moins un moyen d'admission d'air 22 avec une soupape d'admission 24 et une tubulure d'admission 26 et au moins un moyen d'échappement des gaz brûlés 28 avec une soupape 30 et une tubulure d'échappement 32. Les soupapes d'admission 24 et d'échappement 30 sont commandées en ouverture et en fermeture par tous moyens connus, tels que des arbres à cames classiques ou des arbres à cames permettant de faire varier le phasage des lois de levée de ces soupapes et ce indépendamment les unes des autres ou de manière associée, comme ceux connus sous le sigle VVA (Variable Valve Actuation) ou VVT (Variable Valve Timing).

Comme visible sur la figure, les tubulures d'échappement 32 de ce moteur sont reliées un collecteur d'échappement 34 alors que les tubulures d'admission 26 sont reliées à un collecteur d'admission 36. Le collecteur d'échappement est connecté à une ligne d'échappement 38 qui comprend un turbocompresseur 40 qui permet de faire admettre un air d'admission sous pression dans le collecteur d'admission 36 par une conduite 42 dont seuls le début et la fin de cette conduite sont représentés sur la figure et ce à titre de simplification. La ligne d'échappement comprend également un conduit en dérivation 44, dit conduit EGR (Exhaust Gas Recirculation), contrôlé par une vanne 46, dénommée vanne EGR, permettant de faire recirculer une partie des gaz d'échappement à l'admission. Le circuit ainsi formé, dénommé circuit EGR, pourra être du type haute pression comme illustré sur la figure 1, avec un prélèvement de gaz brûlés dans la ligne d'échappement en amont de la turbine 40a du turbocompresseur 40 et d'une éventuelle vanne de contre pression 102, la vanne 46, un éventuel dispositif de refroidissement 47 et un débouché de ces gaz dans la ligne d'admission en amont du collecteur 36 et en aval du compresseur 40b de ce turbocompresseur et d'un éventuel dispositif de restriction de section, comme un papillon rotatif 100, permettant de moduler la pression admission. Ce circuit EGR peut également être du type basse pression avec un prélèvement de gaz brûlés dans la ligne d'échappement 38 en aval d'un filtre à particule (non représenté) et en amont d'un éventuel dispositif de restriction de section (comme un papillon rotatif 102 ), une vanne dédiée au circuit EGR basse pression (semblable à la vanne 46), un éventuel dispositif de refroidissement semblable au dispositif 47 et un débouché de ces gaz en amont du compresseur et en aval d'une éventuelle vanne (non représentée). Il est à noter que le moteur peut recevoir ces deux types de circuits EGR qui pourront être alors utilisés simultanément ou alternativement suivant le point de fonctionnement.

Le moteur comprend également une unité de calcul et de commande 48, dite "calculateur-moteur", qui a pour rôle de contrôler les différents paramètres liés au fonctionnement du moteur en fonction des informations qui lui sont communiquées.

Ce calculateur-moteur 48 comprend en particulier un contrôleur dit "de combustion", qui reçoit des informations relatives à la demande de couple formulée par le conducteur lors d'un appui sur la pédale d'accélérateur 50 par une ligne 52 et à la vitesse de rotation de ce moteur par une ligne 54. En fonction de toutes ces informations, le calculateur 48 envoie, après traitement comme cela sera décrit plus longuement dans la description qui va suivre, des ordres de commandes par des lignes de commande 58a, 58b, 58c, 58d, aux différents actionneurs permettant d'agir sur la boucle d'air de ce moteur, comme la vanne EGR 46, l'actionneur du turbocompresseur 40 et/ou tout autre actionneur de la boucle d'air ou d'échappement, notamment à l'aide de papillons ou de volets, tel que par exemple, le volet 100 disposé à l'admission du moteur ou le volet 102 tel que décrit plus haut. Par boucle d'air, on entend tout élément du moteur, tel que conduits, vannes, turbocompresseur ou autres, qui permettent d'admettre et de contrôler un fluide comme de l'air, de l'air suralimenté et/ou des gaz brûlés dans le collecteur d'admission et dans les cylindres. Des ordres de commandes sont également envoyés par des lignes de commandes 60 à la boucle carburant et plus particulièrement au moyen d'injection de carburant 16, de façon à pouvoir contrôler les différents paramètres d'injection de carburant, comme la pression d'injection, le temps d'injection, le phasage injection, etc. De même la boucle carburant comprend tout élément (vanne, pompe, clapet, rampe d'injection, injecteur pompe,...) permettant d'introduire du carburant dans les chambres de combustion du moteur.

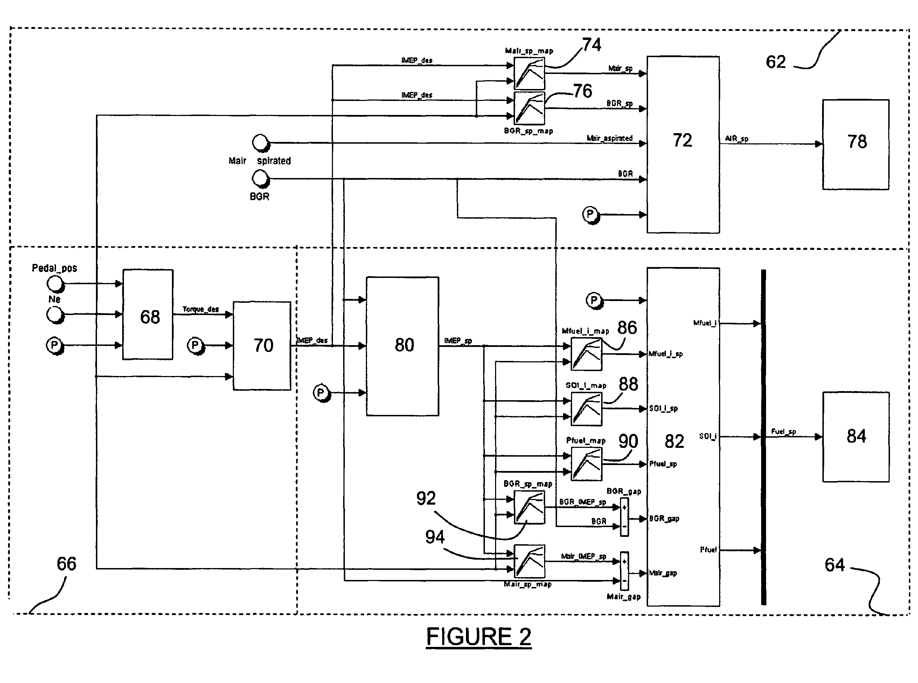

La figure 2 illustre un circuit logique représentatif du contrôleur de combustion qui est intégré dans le calculateur-moteur 48 et qui comprend deux modules de commande distincts, un module 62 pour le contrôle de la boucle d'air et un module 64 pour le contrôle de la boucle carburant, ainsi qu'un module d'acquisition/spécification 66 destiné à acquérir les données de base du contrôle (demande conducteur, vitesse de rotation moteur, ainsi que d'éventuels autres paramètres (P), comme la température moteur) et à superviser les modules de commande.

Le module d'acquisition/spécification 66 contient une unité de détermination de couple 68 destinée à établir le couple désiré (Torque_des) et une unité 70 destinée à déterminer la PMI (Pression Moyenne Indiquée) désirée (IMEP_des) à partir du couple déterminé par l'unité 68. Des informations liées à la position d'enfoncement de la pédale d'accélérateur 50 (Pedal_pos), à la vitesse de rotation du moteur (Ne) ainsi que d'éventuels autres paramètres (P), telle que l'information liée à la position de la pédale de frein, sont envoyés à l'unité 68 alors que des informations concernant le couple désiré (Torque_des), la vitesse de rotation du moteur (Ne) ainsi que d'éventuels autres paramètres (P), comme la température du moteur, le rapport de boîte de vitesse engagé,...sont envoyés à l'unité 70.

Le module de commande 62 de la boucle d'air comprend un bloc de traitement 72 du circuit d'air. La PMI désirée (IMEP_des) provenant de l'unité 70 et la vitesse de rotation du moteur (Ne) sont traduites en entrée du bloc 72 en une masse d'air de consigne (Mair_sp) et un taux de gaz brûlés dans les gaz admis de consigne (BGR_sp) à l'aide des cartographies 74 et 76. Ce bloc reçoit également des informations relatives à la masse d'air aspiré (Mair_aspirated) et au taux de gaz brûlés admis par le cylindre du moteur (BGR) ainsi que d'éventuels autres paramètres (P), comme la pression atmosphérique. Les grandeurs relatives à la masse d'air aspiré (Mair_aspirated) et au taux de gaz brûlés admis par le cylindre du moteur (BGR) pourront être issues de mesures directes ou d'observateurs reconstituant ces données à partir d'autres mesures. Après traitement de toutes ces informations, cette unité 72 envoie des instructions de commande aux différents organes de commande 78 des actionneurs que comporte le moteur et qui peuvent influencer les paramètres relatifs à l'air et/ou aux gaz brûlés recirculés admis dans les cylindres du moteur, afin d'amener de manière adéquate ces paramètres au plus près des valeurs de consigne.

Le module de commande 64 de la boucle carburant comprend un bloc de traitement 80 de la PMI permettant d'obtenir une PMI de consigne (IMEP_sp) à partir des entrées sur la masse d'air aspiré (Mair_aspirated), la PMI désirée (IMEP_des) et éventuellement d'autres paramètres (P), comme la température du moteur, la vitesse de rotation du moteur et/ou les paramètres liés à la recirculation des gaz brûlés, tels que le taux de gaz brûlés (BGR) mesuré ou estimé. Ce module 64 comprend également un bloc de correction d'injection 82 définissant les paramètres d'injection (masse de carburant à introduire dans la chambre de combustion pour chaque injection (Mfuel_i), phasage de chaque injection (SOI_i) et pression d'injection (Pfuel)) qui seront envoyés aux organes de commandes 84 du moyen d'injection 16. Les entrées du bloc 82 sont : la masse de carburant de chaque injection (Mfuel_i_sp), le phasage de chaque injection (SOI_i_sp), la pression d'injection (Pfuel_sp), l'écart de taux de gaz brûlés (BGR_gap) ainsi que l'écart de masse d'air aspiré (Mair_gap) et d'autres éventuels paramètres (P), comme la vitesse de rotation moteur (Ne), la PMI de consigne (IMEP_sp) ou la température du moteur. Les paramètres d'injection (Mfuel_i_sp, SOI_i_sp et Pfuel_sp) résultent des cartographies 86, 88 et 90 prenant en compte la PMI de consigne (IMEP_sp) et la vitesse de rotation du moteur (Ne). L'écart de taux de gaz brûlés (BGR_gap) représente la différence entre le taux de gaz brûlés adapté à la PMI de consigne (BGR_IMEP_sp) résultant d'une cartographie 92 (prenant en compte la PMI de consigne (IMEP_sp) et la vitesse de rotation du moteur (Ne)) et le taux de gaz brûlés mesuré ou estimé (BGR). De même, l'écart de masse d'air aspiré (Mair_gap) représente la différence entre la masse d'air adapté à la PMI de consigne (Mair_IMEP_sp) résultant d'une cartographie 94, prenant en compte la PMI de consigne (IMEP_sp) et la vitesse de rotation du moteur (Ne), et la masse d'air aspiré (Mair_aspirated).

Lors du fonctionnement du moteur, le bloc 68 détermine le couple désiré (Torque_des) à partir de différents paramètres, comme la vitesse de rotation du moteur (Ne), la demande du conducteur via l'enfoncement de la pédale d'accélérateur (Pedal_pos) et d'éventuels autres paramètres (P), tels que l'information liée à la position de la pédale de frein. Ce couple désiré est ensuite transmis au bloc 70 de détermination de PMI désirée qui intègre notamment les exigences relatives à l'agrément de conduite, ainsi que les frottements du moteur et la régulation de ralenti, évalués à partir de la vitesse du moteur (Ne) et d'éventuels autres paramètres (P), comme la température moteur, le rapport de boîte engagé,... l'ensemble permettant de définir la PMI désirée (IMEP_des). Les informations relatives à cette PMI sont envoyées en entrée des cartographies 74 et 76 du module de commande de la boucle d'air 62 pour établir les consignes de masse d'air (Mair_sp) et de taux de gaz brûlés (BGR_sp) en fonction de la vitesse de rotation du moteur (Ne). Ces consignes ainsi que les informations relatives à la masse d'air aspiré (Mair_aspirated) et/ou au taux de gaz brûlés admis par le cylindre du moteur (BGR) ainsi que d'éventuels autres paramètres (P), comme la pression atmosphérique, sont soumises au bloc 72 de traitement de la boucle d'air qui va tenter de répondre à ces consignes en agissant sur les commandes 78 des différents actionneurs de la boucle d'air, comme le papillon d'admission 100, la vanne EGR 46, l'organe de contrôle du turbocompresseur 40 (turbocompresseur à géométrie variable par exemple). La quantité de masse d'air (Mair_aspirated) et le taux de gaz brûlés (BGR) réellement admis dans le cylindre du moteur peuvent être mesurés par tout moyen ou être déterminés à partir d'"'observateurs". Par "observateur", il est entendu tout moyen permettant d'obtenir une évaluation de cette masse d'air et/ou de ce taux, à partir de mesures issues du moteur, telles que le débit d'air en entrée du collecteur d'admission 36 ou en amont du turbocompresseur 40, la pression d'air à l'admission, la température de cet air, la mesure de la richesse à l'échappement, la pression échappement, la position des actionneurs... A partir de ces évaluations, le bloc 72 en assure un contrôle bouclé, en évaluant à tous moments leurs écarts par rapport aux valeurs de consignes Mair_sp et BGR_sp.

Malgré ce contrôle bouclé, la masse d'air et le taux de gaz brûlés entrant dans les cylindres peuvent s'écarter des valeurs de consigne, notamment lors des phases de fonctionnement transitoires entre le mode de combustion homogène et le mode de combustion traditionnelle ou lors des transitoires de charge. En outre, le couple maximal produit par le moteur est limité par la quantité d'air disponible à l'entrée du cylindre et de ce fait la richesse du mélange air/carburant ne peut pas dépasser une certaine valeur sans entraîner une émission de polluants, telles que des fumées.

Pour garantir une combustion optimisée, le module de commande de la boucle carburant 64 va tenir compte de ces éléments pour déterminer les commandes à appliquer au bloc 84 de commandes du moyen d'injection de carburant 16, qui présente la particularité de présenter un temps de réponse nettement plus court que celui de la boucle d'air.

Le bloc de traitement 80 de ce module comprend un algorithme décisionnel qui, à partir de la PMI désirée (IMEP_des) venant du bloc 70, de l'air aspiré (Mair_aspirated) dans le cylindre 12 et éventuellement d'autres paramètres (P), comme l'état thermique du moteur, le régime moteur (Ne)..., définit la valeur de consigne de la PMI (IMEP_sp) qui sera utilisée conjointement à la vitesse de rotation du moteur (Ne) pour déterminer les consignes liées au carburant à injecter dans les cylindres. Ces deux données sont en effet utilisées en entrée des cartographies 86, 88 et 90 pour définir les différentes consignes des paramètres d'injection, comme la masse de carburant introduite dans les cylindres pour chaque injection (Mfuel_i_sp), le phasage de chaque injection (SOI_i_sp) et la pression d'injection (Pfuel_sp). L'indice "i" utilisé dans les paramètres d'injection correspond aux différentes injections qui sont produites dans chaque cylindre au cours du cycle de combustion.

On définit également un taux de gaz brûlés adapté à la PMI de consigne (BGR_IMEP_sp) déterminé par une cartographie 92 identique à la cartographie 76 du module de commande 62 de la boucle d'air, dont les entrées sont la PMI de consigne (IMEP_sp) et la vitesse de rotation du moteur (Ne). Il peut alors être évalué l'écart (BGR_gap) entre le taux de gaz brûlés adapté à la PMI de consigne et le taux mesuré ou estimé (BGR), puis soumettre cet écart au bloc 82 qui corrigera certains des paramètres d'injection précédemment définis qu'il reçoit en entrée pour envoyer des instructions finales de commande au bloc 84 de commande injection.

De même, une masse d'air adapté à la PMI de consigne (Mair_IMEP_sp) est déterminée par une cartographie 94 dont les entrées sont la PMI de consigne (IMEP_sp) et la vitesse de rotation du moteur (Ne). L'écart (Mair_gap) entre la masse d'air adapté à la PMI de consigne et la masse d'air aspiré mesuré ou estimé (Mair_aspirated) est évalué puis soumis au bloc 82 pour d'éventuelles corrections sur certains des paramètres d'injection.

Bien entendu le bloc décisionnel 82 peut tenir compte d'autres paramètres (P) que les écarts (BGR_gap et Mair_gap) décrits plus haut pour établir des corrections à apporter sur les paramètres d'injection qu'il reçoit en entrée, tels que le régime moteur (Ne), la PMI de consigne (IMEP_sp) ou l'état thermique du moteur.

Il peut être noté que l'utilisation de la PMI désirée dans le module de commande 62 de la boucle d'air permet de faire converger le plus rapidement possible l'air et/ou les gaz brûlés vers la valeur de la PMI demandée par le conducteur, tandis que le module de commande 64 de la boucle de carburant utilise la valeur de consigne de la PMI (IMEP_sp) et permet d'adapter les réglages de carburant en fonction de l'air et/ou des gaz brûlés effectivement admis dans le cylindre. Ainsi, grâce à l'invention, la boucle de carburant sera utilisée pour tenter de pallier l'inertie de réponse de la boucle d'air.

La présente invention n'est pas limitée aux exemples de réalisation décrits ci-dessus mais englobe toutes variantes.

Ainsi, il peut être envisagé de ne pas équiper le moteur d'un moyen de suralimentation, comme un turbocompresseur, et l'air admis dans les cylindres sera dans ce cas à une pression voisine de la pression atmosphérique. De même, le moyen d'injection directe de carburant 16 peut revêtir toute autre forme remplissant les mêmes fonctions que le "common rail" : "injecteur-pompe" ou système équivalent.

A noter qu'un tel dispositif de contrôle peut également s'appliquer en partie ou en totalité à des moteurs à allumage commandé munis d'un dispositif d'injection directe du carburant dans la chambre et d'un dispositif de recirculation de gaz brûlés. Dans ce cas, la combustion est contrôlée conjointement par l'air et les gaz brûlés présents dans le cylindre, l'injection de carburant et l'allumage. On pourra donc utiliser, pour déterminer les paramètres liés à l'allumage, les mêmes schémas de détermination que ceux utilisés pour l'injection seule dans le cas de moteurs Diesel, comme notamment l'utilisation de cartographies en fonction de la PMI de consigne (IMEP_sp) et du régime (Ne) pour déterminer la valeur de base de ces paramètres, qui pourra être ensuite corrigée en fonction de l'écart (BGR_gap, Mair gap) entre la grandeur liée aux gaz brûles recirculés et/ou à la masse d'air introduit dans la chambre de combustion et les valeurs de référence de cette grandeur (BGR_IMEP_sp, Mair_IMEP_sp) établies à partir de la PMI de consigne (IMEP_sp).

La présente invention trouve naturellement son application dans le cadre de moteurs Diesel et plus particulièrement dans le cas du moteur décrit dans les demandes de brevet français N° 2 818 324 et 2 818 325 du demandeur. Plus précisément, ce type de moteur comprend au moins un cylindre avec une tête de cylindre, un piston coulissant dans ce cylindre, des moyens d'admission et d'échappement de gaz, une chambre de combustion délimitée sur un côté par la face supérieure du piston comprenant un téton pointant vers la tête du cylindre et disposé au centre d'un bol concave, et au moins un injecteur pour injecter du carburant avec un angle de nappe inférieur ou égal à $2Arctg\dfrac{CD}{2F}$ où CD est le diamètre du cylindre et F la distance entre le point d'origine des jets de carburants issus de l'injecteur et la position du piston correspondant à un angle de vilebrequin de 50° par rapport au point mort haut. Plus particulièrement, cet angle de nappe est choisi entre 0° et 120°.

## Revendications

1. Procédé de contrôle d'un moteur à combustion interne comprenant un moyen d'injection directe de carburant (16) dans la chambre de combustion (14) d'un cylindre (12), un moyen d'admission d'au moins un fluide (22) dans ladite chambre, un moyen d'échappement de gaz brûlés (28) et une unité de calcul et de commande (48) recevant des informations relatives au moins à la demande de couple du conducteur et à la vitesse de rotation du moteur (Ne), **caractérisé en ce qu'**il consiste à :

   a) déterminer le couple désiré (Torque_des) correspondant notamment à la demande du conducteur,
   b) à partir de ce couple désiré, déterminer la PMI désirée (IMEP_des) à partir de laquelle sont établis les paramètres (Mair_sp, BGR_sp) pour commander l'admission d'au moins un fluide dans la chambre de combustion,
   c) déterminer la PMI de consigne (IMEP_sp) à partir de la PMI désirée et d'au moins une grandeur liée au fluide admis dans la chambre de combustion, pour définir les paramètres d'injection de carburant (Mfuel_i, SOI_i, Pfuel) dans ladite chambre de combustion.

2. Procédé de contrôle d'un moteur à combustion interne selon la revendication 1, **caractérisé en ce que** ladite grandeur est liée à l'air introduit dans la chambre de combustion.

3. Procédé de contrôle d'un moteur à combustion interne selon la revendication 2, **caractérisé en ce que** ladite grandeur correspond à la masse d'air introduite dans la chambre de combustion (Mair_aspirated).

4. Procédé de contrôle d'un moteur à combustion interne selon la revendication 1, 2 ou 3, **caractérisé en ce qu'**il consiste à évaluer par des observateurs ladite grandeur.

5. Procédé de contrôle d'un moteur à combustion interne selon la revendication 1, **caractérisé en ce qu'**il consiste à déterminer la PMI de consigne (IMEP_sp) en considérant en outre la vitesse de rotation (Ne) du moteur.

6. Procédé de contrôle d'un moteur à combustion interne selon l'une des revendications 1 à 5, **caractérisé en ce qu'**il consiste à réaliser une correction de l'injection en comparant la grandeur liée aux gaz brûlés recirculés et/ou à la masse d'air introduit dans cette chambre de combustion et les valeurs de référence de cette grandeur (BGR_IMEP_sp, Mair_ IMEP _sp) établies à partir de la PMI de consigne (IMEP_sp).

7. Procédé de contrôle d'un moteur à combustion interne selon la revendication 6, **caractérisé en ce que** la grandeur liée aux gaz brûlés recirculés est estimée à partir d'observateurs.

8. Procédé de contrôle d'un moteur à combustion interne selon l'une des revendications 1 à 7 dans lequel le moteur est un moteur à allumage commandé, **caractérisé en ce qu'**il consiste à contrôler les paramètres de l'allumage à partir de la PMI de consigne (IMEP_sp).

9. Procédé de contrôle d'un moteur à combustion interne selon la revendication 8, **caractérisé en ce qu'**il consiste à corriger les paramètres de l'allumage en fonction de l'écart entre la grandeur liée aux gaz brûles recirculés et/ou à la masse d'air introduit dans la chambre de combustion et les valeurs de référence de cette grandeur (BGR_IMEP_sp, Mair_IMEP_ sp) établies à partir de la PMI de consigne (IMEP_ sp).

10. Moteur à combustion interne à injection directe de carburant comprenant au moins un cylindre (12) avec une chambre de combustion (14) comprenant un moyen d'injection de carburant (16) dans ladite chambre de combustion, un moyen d'admission d'au moins un fluide (26) dans cette chambre de combustion et un moyen d'échappement de gaz brûlés (28), la combustion dans ladite chambre étant contrôlée par une unité de calcul et de commande (48), **caractérisé en ce que** l'unité (48) comprend un module de commande (62) des paramètres d'admission d'au moins un fluide dans la chambre de combustion, un module de commande (64) des paramètres d'injection de carburant et un module d'acquisition/spécification (66) pour les modules de commande, configurés pour mettre en oeuvre le procédé de contrôle selon les revendications 1 à 9.

11. Application du procédé selon l'une des revendications 1 à 7 à un moteur à combustion Diesel.

12. Application du procédé selon l'une des revendications 1 à 7 à un moteur comprenant au moins un cylindre (12), un piston coulissant dans ce cylindre et comprenant un téton pointant vers la tête du cylindre et disposé au centre d'un bol concave, des moyens d'admission (22) et d'échappement de gaz brûlés (28) et au moins un injecteur (19) pour injecter du carburant avec un angle de nappe inférieur ou

égal à $2Arctg \dfrac{CD}{2F}$ où est le diamètre du cylindre et F la distance entre le point d'origine des jets de carburants issus de l'injecteur et la position du piston correspondant à un angle de vilebrequin de 50° par rapport au point mort haut.

**Patentansprüche**

1. Verfahren zum Steuern eines Verbrennungsmotors, der ein Mittel (16) zum direkten Einspritzen von Kraftstoff in die Brennkammer (14) eines Zylinders (12), ein Mittel zum Einlassen mindestens einer Flüssigkeit (22) in die Kammer, ein Mittel zum Auslassen verbrannter Gase (28) und eine Rechen- und Steuereinheit (48), die Informationen über mindestens die Momentanfrage des Fahrers und die Drehzahl des Motors (Ne) empfängt, aufweist, **dadurch gekennzeichnet, dass** es aus Folgendem besteht:

   a) Bestimmen des gewünschten Moments (Torque_des), das insbesondere der Anfrage des Fahrers entspricht,
   b) ausgehend von diesem gewünschten Moment, Bestimmen der gewünschten PMI (IMEP_ des) von welcher ausgehend die Parameter (Mair_sp, BGR_sp) zum Steuern des Einlassens mindestens einer Flüssigkeit in die Brennkammer erstellt werden,
   c) Bestimmen der Soll-PMI (IMEP_sp) ausgehend von der gewünschten PMI und mindestens einer Größe in Zusammenhang mit der in die Brennkammer eingelassenen Flüssigkeit, um die Kraftstoffeinspritzparameter (Mfuel_i, SOI_ I, Pfuel) in die Brennkammer zu definieren.

2. Verfahren zum Steuern eines Verbrennungsmotors nach Anspruch 1, **dadurch gekennzeichnet, dass** die Größe mit der Luft zusammenhängt, die in die Brennkammer eingeführt wird.

3. Verfahren zum Steuern eines Verbrennungsmotors nach Anspruch 2, **dadurch gekennzeichnet, dass** die Größe der Luftmasse entspricht, die in die Brennkammer eingeführt wird (Mair_aspirated).

4. Verfahren zum Steuern eines Verbrennungsmotors nach Anspruch 1, 2 oder 3, **dadurch gekennzeichnet, dass** es darin besteht, die Größe durch Beobachtungen zu beurteilen.

**5.** Verfahren zum Steuern eines Verbrennungsmotors nach Anspruch 1, **dadurch gekennzeichnet, dass** es darin besteht, die Soll-PMI (IMEP_sp) zu bestimmen, indem außerdem die Drehzahl (Ne) des Motors berücksichtigt wird.

**6.** Verfahren zum Steuern eines Verbrennungsmotors nach einem der Ansprüche 1 bis 5, **dadurch gekennzeichnet, dass** es darin besteht, eine Korrektur der Einspritzung auszuführen, indem die Größe, die mit den verbrannten rückgeführten Gasen und/oder der in die Brennkammer eingeführten Luftmasse zusammenhängt und die Bezugswerte dieser Größe (BGR_IMFP_sp, Mair_IMEP_sp), die ausgehend von der Soll-PMI (IMEP_sp) erstellt werden, vergehen werden.

**7.** Verfahren zum Steuern eines Verbrennungsmotors nach Anspruch 6, **dadurch gekennzeichnet, dass** die Größe, die mit den rückgeführten verbrannten Gasen zusammenhängt, ausgehend von Beobachtern geschätzt wird.

**8.** Verfahren zum Steuern eines Verbrennungsmotors nach einem der Ansprüche 1 bis 7, bei dem der Motor eine gesteuerte Zündung hat, **dadurch gekennzeichnet, dass** es darin besteht, die Zündparameter ausgehend von der Soll-PMI (IMEP_sp) zu steuern.

**9.** Verfahren zum Steuern eines Verbrennungsmotors nach Anspruch 8, dadurch gekenrnzeichnet, dass es darin besteht, die Zündparameter in Abhängigkeit von dem Unterschied zwischen der Größe, die mit den rückgeführten verbrannten Gasen und/oder der in die Brennkammer eingeführten Luftmasse zusammenhängt, und den Bezugswerten dieser Größe (BGR_IMEP_sp, Mair_IMEP_sp), die ausgehend von der Soll-PMI (IMEP_sp) erstellt werden, zu korrigieren.

**10.** Verbrennungsmotor mit direkter Kraftstoffeinspritzung, der mindestens einen Zylinder (12) mit einer Brennkammer (14) aufweist, der ein Mittel (16) zum Einspritzen in die Brennkammer, ein Einlassmittel mindestens einer Flüssigkeit (26) in diese Brennkammer und ein Mittel zum Auslassen verbrannter Gase (28) aufweist, wobei die Verbrennung in der Kammer von einer Rechnen- und Steuereinheit (48) gesteuert wird, **dadurch gekennzeichnet, dass** die Einheit (48) ein Steuermodul (62) der Einlassparameter mindestens einer Flüssigkeit in die Brennkammer, ein Steuermodul (64) der Kraftstoffeinspritzparameter und ein Erfassungs-/Spezifikationsmodul (66) für die Steuermodule, die konfiguriert sind, um das Steuerverfahren nach den Ansprüchen 1 bis 9 umzusetzen, aufweist.

**11.** Anwendung des Verfahrens nach einem der Ansprüche 1 bis 7 an einen Dieselverbrennungsmotor,

**12.** Anwendung des Verfahrens nach einem der Ansprüche 1 bis 7 an einen Motor, der mindestens einen Zylinder (12) aufweist, wobei ein Kolben in diesem Zylinder gleitet, und der einen Zapfen aufweist, der zu dem Kopf des Zylinders zeigt und in der Mitte einer konkaven Schale angeordnet ist, Mittel zum Einlassen (22) und Auslassen (28) verbrannter Gase und mindestens einen Injektor (19) zum Einspritzen von Kraftstoff mit einem Schichtwinkel kleiner oder

gleich $2 Arctg \dfrac{CD}{2F}$ aufweist, wobei CD der Durchmesser des Zylinders und F die Entfernung zwischen dem Ursprung der Kraftstoffstrahlen, die aus dem Injektor austreten, und der Position des Kolbens, die einem Kurbelwinkel von 50° in Bezug zu dem oberen Totpunkt entspricht, ist.

**Claims**

**1.** A method of controlling an internal-combustion engine comprising a means (16) allowing direct fuel injection into combustion chamber (14) of a cylinder (12), an intake means (22) allowing at least one fluid into said chamber, a burnt gas exhaust means (28) and a calculation and control unit (48) receiving information relative to at least the driver's torque request and to the engine rotation speed (Ne), **characterized in that** it consists in:

a) determining the desired torque (Torque_des) corresponding notably to the driver's request,
b) from this desired torque, determining the desired IMEP (IMEP_des) from which parameters (Mair_sp, BGR_sp) for controlling the intake of at least one fluid into the combustion chamber are established,
c) determining the IMEP setpoint (IMEP_sp) from the desired IMEP and from at least one quantity related to the fluid allowed into the combustion chamber in order to define parameters (Mfuel_i SOI_i, Pfuel) for fuel injection into said combustion chamber.

**2.** An internal-combustion engine control method as claimed in claim 1, **characterized in that** said quantity is related to the air fed into the combustion chamber.

**3.** An internal-combustion engine control method as claimed in claim 2, **characterized in that** said quantity corresponds to the air mass fed into the combustion chamber (Mair_aspirated).

**4.** An internal-combustion engine control method as claimed in claim 1, 2 or 3, **characterized in that** it consists in evaluating said quantity by observers.

**5.** An internal-combustion engine control method as claimed in claim 1, **characterized in that** it consists in determining the IMEP setpoint (IMEP_sp) by also considering the engine rotation speed (Ne).

**6.** An internal-combustion engine control method as claimed in any one of claims 1 to 5, **characterized in that** it consists in performing an injection correction by comparing the quantity related to the recirculated burnt gas and/or to the air mass fed into this combustion chamber with the reference values (BGR_IMEP_sp, Mair_IMEP_sp) of this quantity established from the IMEP setpoint (IMEP_sp).

**7.** An internal-combustion engine control method as claimed in claims 6, **characterized in that** the quantity related to the recirculated burnt gas is estimated from observers.

**8.** An internal-combustion engine control method as claimed in any one of claims 1 to 7 wherein the engine is a spark ignition engine, **characterized in that** it consists in controlling the ignition parameters from the IMEP setpoint (IMEP_sp).

**9.** An internal-combustion engine control method as claimed in claim 8, **characterized in that** it consists in correcting the ignition parameters according to the difference between the quantity related to the recirculated burnt gas and/or to the air mass fed into the combustion chamber and the reference values of this quantity (BGR_IMEP_sp, Mair_IMEP_sp) established from the IMEP setpoint (IMEP_sp).

**10.** An internal-combustion engine with direct fuel injection comprising at least one cylinder (12) with a combustion chamber (14) comprising a means (16) allowing fuel injection into said combustion chamber, a means (26) allowing intake of at least one fluid into this combustion chamber and a burnt gas exhaust means (28), the combustion in said chamber being controlled by a calculation and control unit (48), **characterized in that** unit (48) comprises a module (62) controlling the parameters for the intake of at least one fluid into the combustion chamber, a module (64) controlling the fuel injection parameters and an acquisition/specification module (66) for the control modules, configured for implementing the control method as claimed in claims 1 to 9.

**11.** Application of the method as claimed in any one of claims 1 to 7 to a Diesel combustion engine,

**12.** Application of the method as claimed in any one of claims 1 to 7 to an engine comprising at least one cylinder (12), a piston sliding in this cylinder and comprising a teat pointing towards the cylinder head and arranged at the centre of a concave bowl, intake means (22) and burnt gas exhaust means (28) and at least one injector (19) for injecting fuel with a nappe angle smaller than or equal to

$$2\,Arctg\,\frac{CD}{2F}\,,$$ where CD is the diameter of the cylinder and F the distance between the point of origin of the fuel jets from the injector and the piston position corresponding to a crank angle of 50° with respect to the top dead center.

## FIGURE 1

FIGURE 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2818324
- FR 2818325
- US 2001013329 A
- US 5934249 A
- EP 1384875 A
- EP 1279821 A